# EUROPEAN PATENT SPECIFICATION

(11) **EP 2 072 240 B1**
(45) Date of publication and mention of the grant of the patent: **29.08.2012**
(21) Application number: 08170908.1
(22) Date of filing: 08.12.2008
(51) Int. Cl.: B29D 30/24, B29D 30/26

(54) **Sleeveless tire building drum**
Manschettenlose Reifenbautrommel
Tambour servant à fabriquer un pneu sans manchon

(30) Priority: 18.12.2007 US 14553 P
(43) Date of publication of application: 24.06.2009
(73) Proprietor: The Goodyear Tire & Rubber Company, Akron, OH 44316-0001 (US)
(72) Inventor: De Mello Pinto, Ricardo, Akron, 44333-4003 (US); De Oliveira, Cesar Nazare, Jd. Sta. Catarina - SP (BR); De Souza, Jose Luiz, Jd. Ipiranga, Americana - SP (BR); Gentil, Luis Carlos, Anavec. Limeira - SP (BR)
(74) Representative: Kutsch, Bernd

(56) References cited:
- EP-A- 0 825 014
- EP-A- 1 612 033
- EP-A- 1 674 250
- WO-A-01/89819
- WO-A-2007/097050
- GB-A- 983 479
- JP-A- 2005 041 168
- US-A- 4 855 008
- US-A- 4 929 298
- US-A1- 2001 000 582

## Description

### Field of the Invention

The invention relates to tire building machinery, and more particularly, to a tire building drum, and a method of converting a tire building drum to a sleeveless drum.

### Background of the Invention

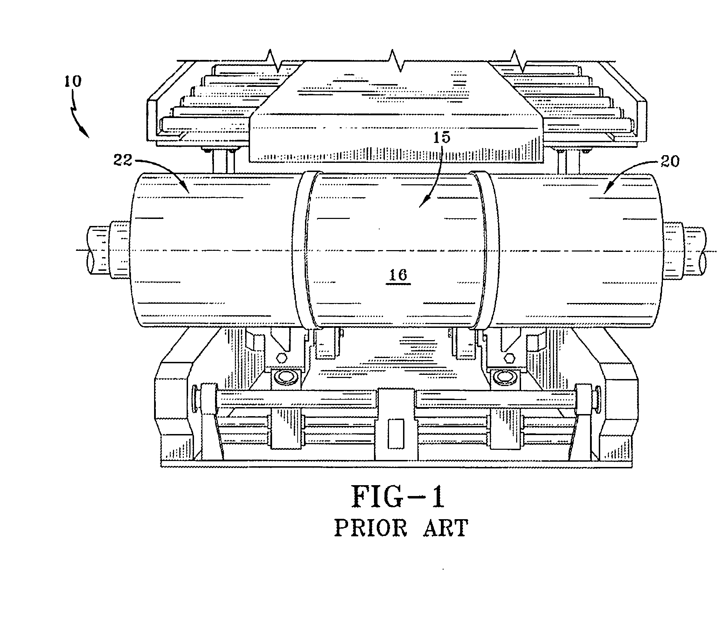

Prior art tire building drums 10 such as shown in Figure 1 typically have a center section 15 in the middle of two end sections 20, 22. The center section 15 is covered with a rubber coated sleeve 16 that has ends that are anchored in the center section 15 (not shown). The end sections 20, 22 are typically axially movable away from the center section. Each tire has on its particular building specification a first position axial width, which may vary according to tire size, as shown in Table I. Even for same tire rim diameter, the sleeve may need to be changed out. In order to accommodate different tire sizes, the central sleeve is generally changed out with a different size central sleeve. This change out results in lost productivity and cost. Thus an improved method and apparatus is desired which would reduce or eliminate the lost productivity due to the changeout of the central sleeve. It is desired to also have an improved method of modifying a conventional tire building drum to remove the center sleeve.

EP-A- 1 612 033 describes a tire building drum comprising a plurality of segments in a cylindrical array with cover plates mounted over the segments. The drum comprises a sleeve covering the cover plates.

US-A- 2001/0000582 describes a process and a drum for constructing a green tire wherein the drum comprises an elastomeric casing.

WO-A- 2007/097050 describes a drum comprising a plurality of holes for winding a sheet-like member.

GB-A- 983,497 describes a tire building drum comprising a plurality of segments which, in the uncollapsed state, lay circumferentially in a side-by-side relationship and form the tire building surface.

US-A- 4,855,008 describes a tire building drum in accordance with the preamble of claim 3.

### Summary of the Invention

The invention provides in a first aspect a method of converting a tire building drum having a sleeve into a sleeveless tire building drum according to claim 1.

The invention provides in a second aspect a sleeveless tire building drum according to claim 3.

Dependent claims refer to preferred embodiments of the invention.

### Brief Description of the Drawings

The invention will be described by way of example and with reference to the accompanying drawings in which:
FIG. 1 is a front view of a prior art tire building drum;
FIG. 2 is a front perspective view of a sleeveless tire building drum of the present invention;

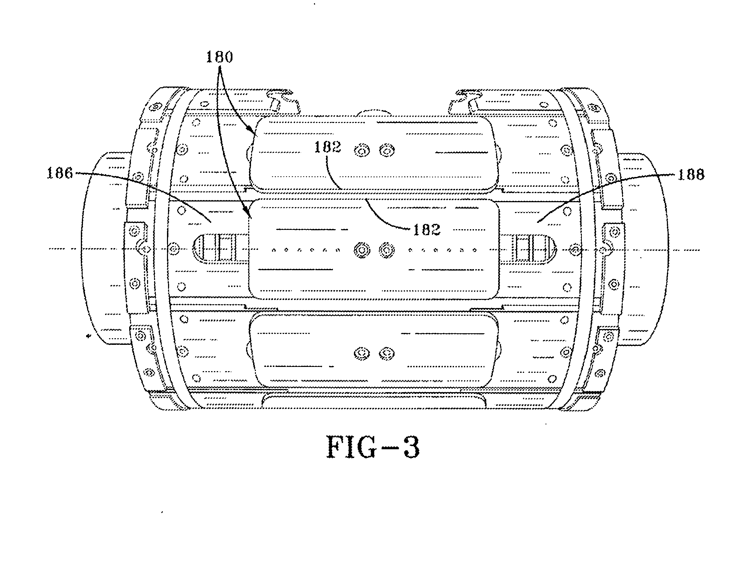

FIG. 3 is a front view of the center section of the tire building drum;
FIG. 4 is a front view of the center section of the tire building drum with the coverplate and a portion of the segment plates removed;
FIG. 5A is a front view of a piston chock;
FIG. 5B is a front view of a piston chock and piston;
FIG. 6a illustrates a close up view of the piston flanges located on the center section without a filler ring;
FIG. 6B illustrates a filler ring;
FIG. 6C illustrates the piston flanges located on the center section with a filler ring;
FIG. 7A illustrates a prior art coverplate;
Fig. 7B illustrates a coverplate of the present invention;
Fig. 7C illustrates the rear view of the coverplate of Fig. 7B shown with the manifold and fluid ports for vacuum;
FIG. 8A illustrates lateral segments of the prior art;
Fig. 8B illustrates modified segments having elongated axial slots;
FIG. 8C illustrates a rear view of a coverplate and segments assembly.

### Detailed Description of the Invention

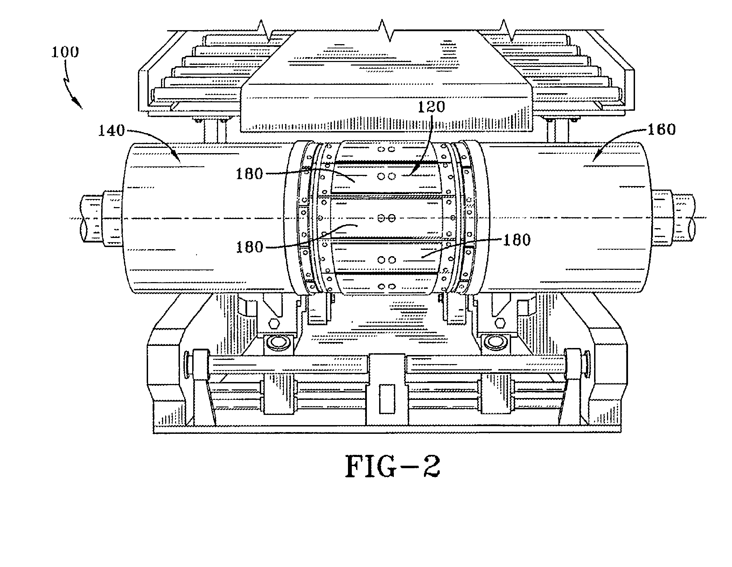

A first embodiment of a sleeveless tire building drum 100 is shown in Figure 2. The sleeveless tire building drum 100 may be derived from a conventional prior art tire building drum such as shown in Figure 1, utilizing the method steps of the present invention. For some tire building applications, the center sleeve's dominant function is to create vacuum on the first stage drum, and hold the rubber components in place during assembly. The inventors have found a way to eliminate the sleeve, while retaining the functionality of the vacuum function. The new drum has the added benefit of not requiring the changing of the center portion sleeve with different size tires.

As shown in Figure 2, a tire building drum of the present invention includes a cylindrical shaped drum 100. The tire drum is rotatable about its longitudinal axis. The tire drum has a center portion 120 for receiving successive layers of tire building components such as an inner liner, side walls, chafers, breakers, apexes, ply and beads. Preferably for this application, the inner liner is preassembled to the ply. The center portion 120 is also preferably adapted to expand radially outward, in order to tighten up the tire building components over the wire beads and to turn up the ends over the beads. The tire drum further comprises a left portion 140 of the drum and a right portion 160 of the drum located on either end of the center portion 120. The left portion 140 and the right portion 160 may articulate in the axial direction, moving towards and away from the center portion 120 with conventional internal mechanisms (not shown).

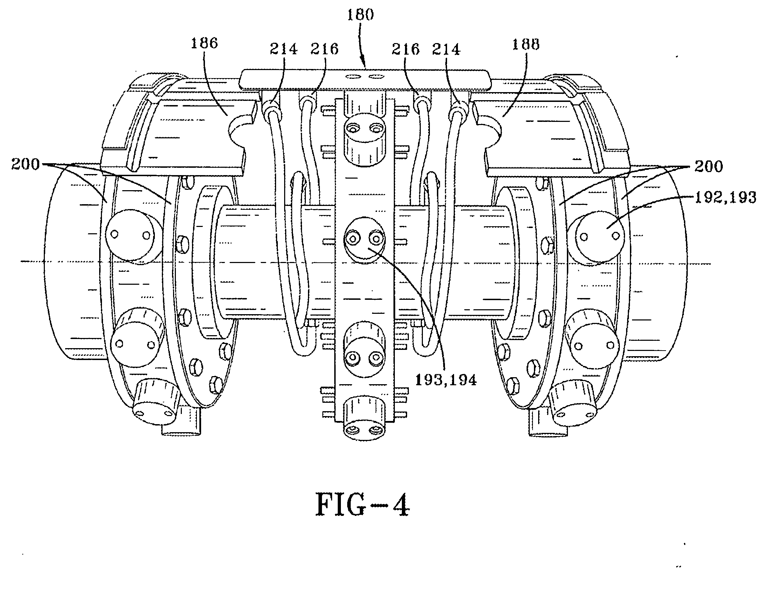

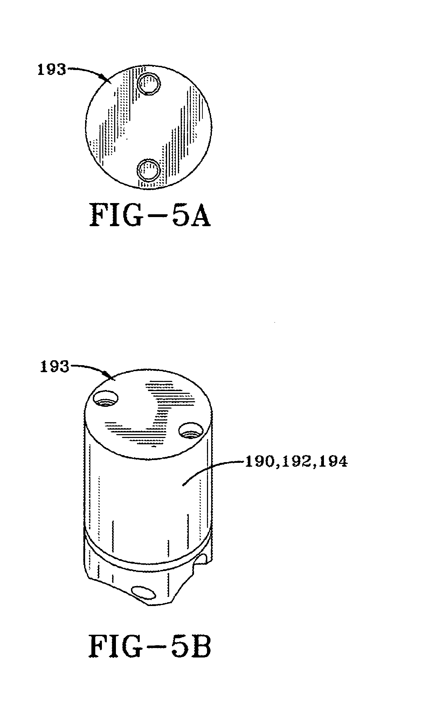

In order to alter a conventional tire building drum with a center sleeve to a sleeveless drum, the first step is to remove the center sleeve from the center section 120 (not shown). When the sleeve is removed, a plurality of coverplates 180 are exposed. The coverplates are generally rectangular and are arranged about the center portion of the drum circumferentially. The lateral edges 182 of the coverplates are in abutting relationship about the circumference of the drum. As shown in Figure 4, underneath each coverplate is a left and right segment 186, 188. The left and right segments 186, 188 are connected to a plurality of pistons 190, 192, 194 arranged about the circumference of the tire building drum, typically at two or more locations, more preferably three. Thus there are an array of left and right lateral pistons 190, 192. More preferably there is an array of center pistons 194. The pistons allow the center section to radially expand. In order to compensate for the loss of diameter when the drum is radially expanded due to the removal of the center sleeve, circular piston chocks 193 were placed on top of all of the pistons, at all locations. The piston chocks as shown in Figure 5, are round spacers placed on top of each piston adding radial height in order to compensate for loss in diameter due to sleeve removal.

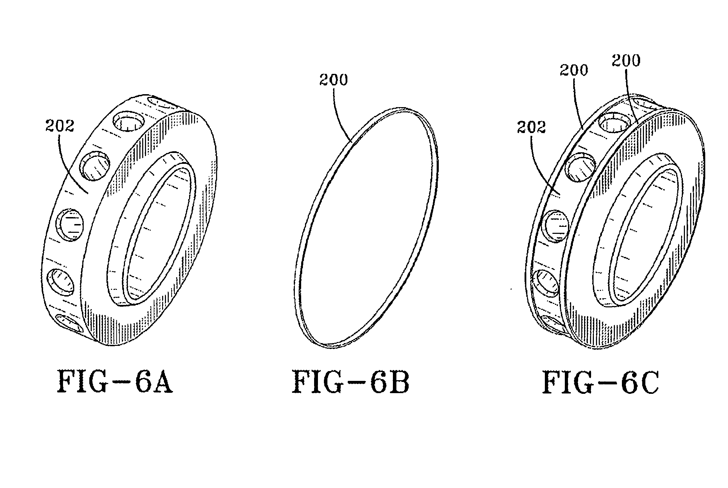

Next, filler rings 200 are added to the center section, one the left and right side, adjacent left and right flanges 202, 204 that house pistons 190, 192. Fig. 6A illustrates the piston flanges without the rings. Fig. 6B illustrates a filler ring 200, and Fig. 6C illustrates the filler rings 200 on each side of flange 202. The filler rings 200 compensate for the loss in axial width due to removal of the sleeve.

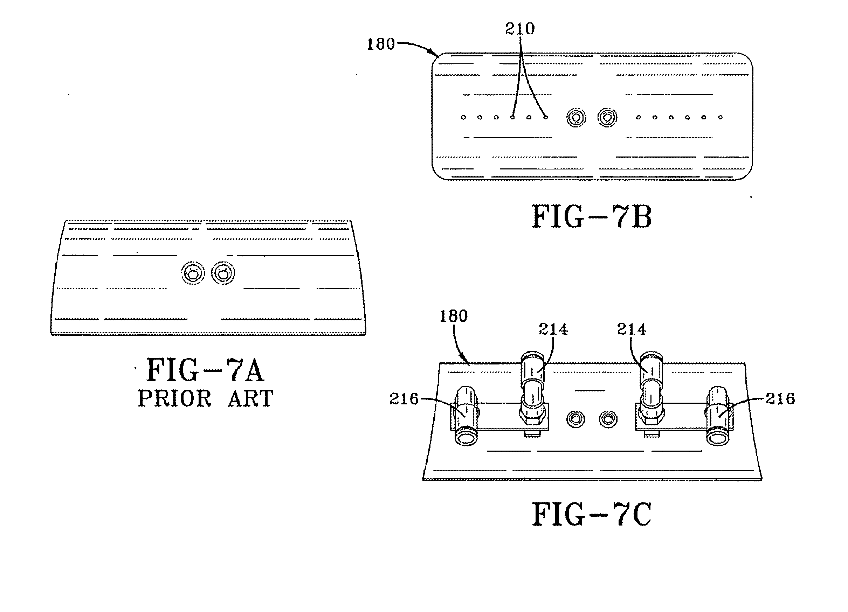

Next, the coverplates 180 are modified such that there are a plurality of small holes on the front face of the plate for the purpose of supplying a vacuum. Fig. 7A illustrates the prior art coverplate, while Fig. 7B illustrates two sets of additional holes 210 added to the coverplate 180. Each set is connected to a manifold 212 having fluid an inlet port 214 and an outlet port 216. The inlet port 214 is connected to a vacuum source, which is typically located in the center shaft. The outlet port is connected to an exhaust line, which may be ported through the center shaft.

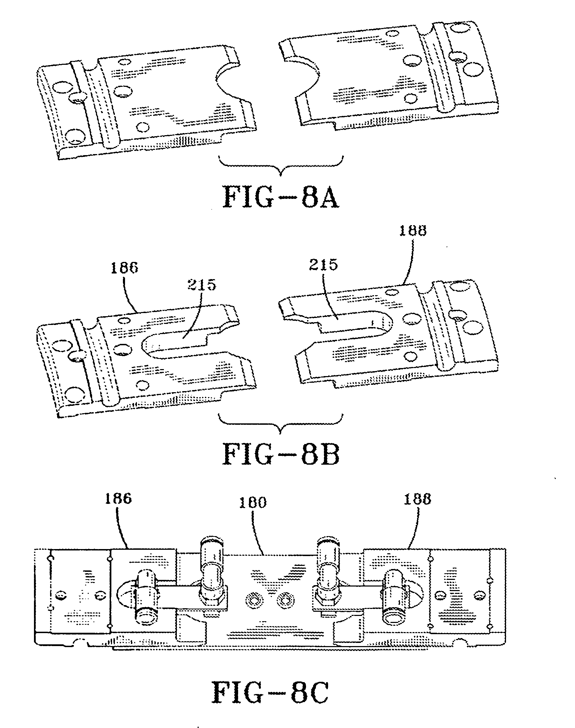

Next, the lateral segments 186, 188 were modified as shown in Figure 8B. Figure 8A illustrates the lateral segments prior to modification. Figure 8B illustrates the modified lateral segments, wherein each segment has an axial elongated slot 215 preferably milled therein. The elongated slots 215 allow for axial translation of the center section and to avoid interference with the fluid manifolds 212 and ports 214, 216. Figure 8C illustrate the assembly of the segments 186, 188 and the cover plate 180.

The order of the above method steps need not be performed in the order described. The above steps may also be utilized when building a sleeveless building drum.

Figure 2 illustrates the assembled sleeveless tirebuilding drum of the invention. The outer coverplates 180 provide vacuum on the rubber components via small holes on the outer surface. The coverplates are flush with the outer surface of the drum after the radial height has been compensated for by the piston chocks. The center section of the drum can radially expand as well as axially translate. The axial oriented slots of segments allow the drum to axially contract without interfering with the fluid manifold on the rear of the coverplate. The sleeveless tirebuilding drum of the present invention reduces the need of changing out the sleeve or center section, thus reducing costs and increasing productivity.

## Claims

1. A method of converting a tire building drum (10) into a sleeveless tire building drum (100), the method comprising the steps of:
providing a tire building drum (10) having a center sleeve (16), and a plurality of cover plates (180) comprising a center portion (120) and a plurality of segments (186, 188) located underneath the plurality of cover plates (180),
wherein the cover plates (180) are connected to radially oriented pistons (194) for radial movement of the center portion (120), wherein the plurality of segments (186, 188) located underneath the plurality of cover plates (180) are lateral segments and wherein elongated slots (215) are provided in the lateral segments for receiving the fluid manifold (212) connected to the cover plates (180);
removing the center sleeve (16);
providing a plurality of holes (210) on the cover plates (180);
connecting the holes (210) to a fluid manifold (212); and
connecting the fluid manifold (212) to a vacuum source.

2. The method of claim 1 wherein a plurality of spacer plates or piston chocks are added to the pistons (194).

3. A sleeveless tire building drum comprising a rotatable drum comprising a left and right section (140, 160) and a center section (120), the center section (120) being radially expandable and the left and right section (140, 160) being axially movable, wherein the center section (120) comprises a plurality of cover plates (180) mounted on the circumference of the center section (120), each cover plate (180) having an outer surface comprising a plurality of holes (210) and a inner surface comprising a manifold (212) connected to the plurality of holes (210), the manifold (212) being connected to a vacuum source, and wherein the center section (120) of the tire building drum it not covered by an outer sleeve, **characterized in that** the drum comprises a plurality of lateral segments (186, 188) located underneath the cover plates (180), the lateral segments comprising elongated slots (215), the manifold (212) at least partially being located in the elongated slots (215).

4. The sleeveless tire building drum of claim 3 further comprising a plurality of segments (186, 188) mounted under the cover plate (180), wherein each segment (186, 188) has an axially oriented slot (215).

5. The sleeveless tire building drum of at least one of the previous claims 3 and 4 wherein the cover plates (180) are connected to radially oriented pistons (194), the pistons (194) each comprising a spacer plate or a piston chock (193).

6. The sleeveless tire building drum of at least one of the previous claims 3 to 5 wherein the cover plates (180) in the center section are configured to directly receive tire components thereon.

7. The sleeveless tire building drum of at least one of the previous claims 3 to 6 wherein the outer surface of the cover plates (180) is flush with the outer surface of the building drum.

## Patentansprüche

1. Verfahren zur Umwandlung einer Reifenbautrommel (10) in eine manschettenlose Reifenbautrommel (100), wobei das Verfahren die Schritte umfasst des:
Bereitstellens einer Reifenbautrommel (10) mit einer zentralen Manschette (16) und einer Vielzahl von Abdeckplatten (180), umfassend einen zentralen Teil (120) und eine unter der Vielzahl von Abdeckplatten (180) befindliche Vielzahl von Segmenten (186, 188), wobei die Abdeckplatten (180) mit radial ausgerichteten Kolben (194) zur radialen Bewegung des zentralen Teils (120) verbunden sind, wobei die unter der Vielzahl von Abdeckplatten (180) befindliche Vielzahl von Segmenten (186, 188) laterale Segmente sind und wobei in den lateralen Segmenten längliche Schlitze (215) zur Aufnahme des mit den Abdeckplatten (180) verbundenen Fluidverteilers (212) vorgesehen sind;
Entfernens der zentralen Manschette (16);
Anbringens einer Vielzahl von Löchern (210) an den Abdeckplatten (180);
Verbinden der Löcher (210) mit einem Fluidverteiler (212); und
Verbinden des Fluidverteilers (212) mit einer Vakuumquelle.

2. Verfahren nach Anspruch 1, wobei eine Vielzahl von Abstandhalterplatten oder Kolben-Unterlegstücken zu den Kolben (194) hinzugefügt wird.

3. Manschettenlose Reifenbautrommel, umfassend eine rotierbare Trommel, umfassend einen linken und einen rechten Abschnitt (140, 160) und einen zentralen Abschnitt (120), wobei der zentrale Abschnitt (120) radial expandierbar ist und der linke und der rechte Abschnitt (140, 160) axial bewegbar sind, wobei der zentrale Abschnitt (120) eine am Umfang des zentralen Abschnitts (120) montierte Vielzahl von Abdeckplatten (180) umfasst, wobei jede Abdeckplatte (180) eine Außenfläche, die eine Vielzahl von Löchern (210) umfasst, und eine Innenfläche, die einen mit der Vielzahl von Löchern (210) verbundenen Verteiler (212) umfasst, aufweist, wobei der Verteiler (212) mit einer Vakuumquelle verbunden ist, und wobei der zentrale Abschnitt (120) der Reifenbautrommel nicht durch eine äußere Manschette bedeckt ist, **dadurch gekennzeichnet, dass** die Trommel eine Vielzahl von unter den Abdeckplatten (180) befindlichen lateralen Segmenten (186, 188) umfasst, wobei die lateralen Segmente längliche Schlitze (215) umfassen, wobei der Verteiler (212) sich mindestens teilweise in den länglichen Schlitzen (215) befindet.

4. Manschettenlose Reifenbautrommel nach Anspruch 3, weiter eine unter der Abdeckplatte (180) montierte Vielzahl von Segmenten (186, 188) umfassend, wobei jedes Segment (186, 188) einem axial orientierten Schlitz (215) aufweist.

5. Manschettenlose Reifenbautrommel nach mindestens einem der vorgenannten Ansprüche 3 und 4, wobei die Abdeckplatten (180) mit radial ausgerichteten Kolben (194) verbunden sind, wobei die Kolben (194) jeder eine Abstandhalterplatte oder ein Kolben-Unterlegstück (193) umfassen.

6. Manschettenlose Reifenbautrommel nach mindestens einem der vorgenannten Ansprüche 3 bis 5, wobei die Abdeckplatten (180) in dem zentralen Bereich dazu konfiguriert sind, direkt Reifenbauteile darauf aufzunehmen.

7. Manschettenlose Reifenbautrommel nach mindestens einem der vorgenannten Ansprüche 3 bis 6, wobei die Außenfläche der Abdeckplatten (180) bündig mit der Außenfläche der Bautrommel ist.

## Revendications

1. Procédé pour transformer un tambour de confection de bandages pneumatiques (10) en un tambour de confection de bandages pneumatiques sans chambre (100), le procédé comprenant les étapes consistant à :
procurer un tambour de confection de bandages pneumatiques (10) possédant un manchon central (16) et plusieurs plaques de recouvrement (180) comprenant une portion centrale (120) et plusieurs segments (186, 188) qui sont disposés en dessous desdites plusieurs plaques de recouvrement (180), les plaques de recouvrement (180) étant reliées à des pistons (194) orientés en direction radiale pour le mouvement radial de la portion centrale (120), lesdits plusieurs segments (186, 188) disposés en dessous desdites plusieurs plaques de recouvrement (180) étant des segments latéraux et des fentes allongées (215) étant prévues dans les segments latéraux pour la réception du collecteur de fluide (212) relié aux plaques de recouvrement (180) ;
retirer le manchon central (16) ;
pratiquer plusieurs trous (210) dans les plaques de recouvrement (180) ;
relier les trous (210) à un collecteur de fluide (212) ; et
relier le collecteur de fluide (212) à une source de vide.

2. Procédé selon la revendication 1, dans lequel on ajoute plusieurs plaques d'écartement ou silentblocs de pistons aux pistons (194).

3. Tambour de confection de bandages pneumatiques sans chambre comprenant un tambour rotatif comprenant une partie gauche et une partie droite (140, 160) et une partie centrale (120), la partie centrale (120) étant à même de s'élargir en direction radiale et les parties gauche et droite (140, 160) étant mobiles en direction axiale, la partie centrale (120) comprenant plusieurs plaques de recouvrement (180) montées sur la circonférence de la partie centrale (120), chaque plaque de recouvrement (180) possédant une surface externe comprenant plusieurs trous (210) et une surface interne comprenant un collecteur (212) reliée auxdits plusieurs trous (210), le collecteur (212) étant relié à une source de vide, et dans lequel la partie centrale (120) du tambour de confection de bandages pneumatiques n'est pas recouverte par un quelconque manchon externe, **caractérisé en ce que** le tambour comprend plusieurs segments latéraux (186, 188) qui sont disposés en dessous des plaques de recouvrement (180), les segments latéraux comprenant des fentes allongées (215), le collecteur (212) étant disposé au moins en partie dans les fentes allongées (215).

4. Tambour de confection de bandages pneumatiques sans chambre selon la revendication 3, comprenant en outre plusieurs segments (186, 188) montés en dessous de la plaque de recouvrement (180), chaque segment (186, 188) possédant une fente (215) orientée en direction axiale.

5. Tambour de confection de bandages pneumatiques sans chambre selon au moins une des revendications précédentes 3 et 4, dans lequel les plaques de recouvrement (180) sont reliées à des pistons (194) orientés en direction radiale, les pistons (194) comprenant chacun une plaque d'écartement ou un silentbloc de piston (193).

6. Tambour de confection de bandages pneumatiques sans chambre selon au moins une des revendications précédentes 3 à 5, dans lequel les plaques de recouvrement (180) dans la partie centrale sont configurées pour y recevoir directement les composants.

7. Tambour de confection de bandages pneumatiques sans chambre selon au moins une des revendications précédentes 3 à 6, dans lequel la surface externe des plaques de recouvrement (180) vient se disposer à fleur avec la surface externe du tambour de confection.
